# EUROPÄISCHE PATENTSCHRIFT

(11) **EP 0 865 973 B1**
(45) Veröffentlichungstag und Bekanntmachung des Hinweises auf die Patenterteilung: **31.07.2002**
(21) Anmeldenummer: 98104593.3
(22) Anmeldetag: 13.03.1998
(51) Int. Cl.: B60R 21/16

(54) **Gassack für ein Fahrzeuginsassen-Schutzsystem**
Air bag for a vehicle occupant protecting system
Coussin gonflabe pour un système de protection des occupants d'un véhicule

(30) Priorität: 20.03.1997 DE 29705133 U
(43) Veröffentlichungstag der Anmeldung: 23.09.1998
(73) Patentinhaber: TRW Occupant Restraint Systems GmbH & Co. KG, 73551 Alfdorf (DE)
(72) Erfinder: Nagel, Uwe, 73557 Mutlangen (DE)
(74) Vertreter: Degwert, Hartmut, Dipl.-Phys.

(56) Entgegenhaltungen:
- WO-A-98/06602
- DE-A- 4 443 027
- GB-A- 2 271 322
- US-A- 5 464 250
- US-A- 5 647 609

## Beschreibung

Die Erfindung betrifft einen Gassack für ein Fahrzeuginsassen-Schutzsystem aus zwei aufeinandergefalteten und miteinander verbundenen Lagen eines einstückigen Materialzuschnitts, wobei der Materialzuschnitt einen Hauptabschnitt und zwei einwärts gefaltete Randabschnitte aufweist.

Ein gattungsgemäßer Gassack ist in der deutschen Offenlegungsschrift DE 44 43 027 A1 beschrieben. Der Gassack besteht aus zwei aufeinandergefalteten und miteinander verbundenen Lagen eines einstückigen Materialzuschnitts. Um den für einen Seitenbag gewünschten flachen Querschnitt zu erhalten, werden zwei Randabschnitte des Materialzuschnitts einwärts auf verschiedene Seiten eines Hauptabschnitts gefaltet. Die jeweils freien Ränder der Randabschnitte werden mit dem Hauptabschnitt vernäht, wobei der Abstand der dabei entstehenden Nähte die Dicke des Gassackkissens mitbestimmt. In einer Querschnittansicht des Gassacks ergibt sich so ein Verlauf des Materialzuschnitts in Form einer Acht, und der so gebildete Gassack ist in zwei Kammern geteilt. Die Kammern stehen lediglich über eine Durchgangsöffnung miteinander in Verbindung, so daß sie nur nacheinander befüllt werden können. Die Herstellung eines Gassacks, dessen gesamtes Volumen gleichzeitig befüllt wird, ist durch den Verlauf des Materialzuschnitts in Form einer Acht nur schwer zu bewerkstelligen. Das Vernähen der beiden freien Ränder der Randabschnitte auf verschiedenen Seiten des Hauptabschnitts zieht eine erhebliche Nahtlänge nach sich. Da alle Nähte weitgehend druckdicht und zugfest ausgeführt werden müssen, erschwert und verteuert eine große Nahtlänge den Herstellungsprozeß des Gassacks.

Um bei einem konventionellen Gassack mit nur einer Kammer den für einen Seitenbag gewünschten flachen Querschnitt zu erzielen, werden Fangbänder benötigt. In der deutschen Gebrauchsmusterschrift DE 296 08 055 U1 ist ein Seitenbag beschrieben, bei dem ein flacher Querschnitt durch Einnähen eines separaten Fangbands erzielt wird. Das Fangband wird an beiden Enden mit dem Gassack vernäht und begrenzt die Dicke des Gassackkissens im aufgeblasenen Zustand. Die an beiden Enden des Fangbands erforderlichen Nähte und die schwierige Handhabung und Positionierung des separaten Fangbandes erschweren den Herstellungsprozeß.

Gegenstand der zum Stand der Technik gemäß Artikel 54(3) und (4) EPÜ gehörenden WO 9806602 A ist bereits ein Gassack aus zwei aufeinandergefalteten und miteinander verbundenen Lagen eines einstückigen Materialzuschnitts. Der Materialzuschnitt hat einen Hauptabschnitt und zwei einwärts gefaltete Randabschnitte. Ein die beiden Lagen verbindendes Fangband ist dadurch gebildet, daß beide Randabschnitte auf dieselbe Seite des Hauptabschnitts gefaltet sind und der freie Rand des einen Randabschnitts mit dem Hauptabschnitt durch eine Naht verbunden ist, während der freie Rand des anderen Randabschnitts mit einem mittleren Bereich des erst genannten Randabschnitts durch eine Naht verbunden ist.

Mit der Erfindung soll die Herstellung eines Gassacks mit flachem Querschnitt mit einem einfachen Materialzuschnitt vereinfacht werden.

Erfindungsgemäß ist dazu wenigstens ein die beiden Lagen miteinander verbindendes Fangband vorgesehen. Beide Randabschnitte sind auf dieselbe Seite des Hauptabschnitts gefaltet. Der freie Rand des einen Randabschnitts ist mit dem freien Rand des anderen Randabschnitts durch eine Naht verbunden. Die seitlichen freien Ränder der Randabschnitte sind durch Nähte verbunden. An einem Teil von wenigstens einem der freien Ränder der Randabschnitte ist ein Materiallappen ausgebildet, der mit dem gegenüberliegenden Hauptabschnitt verbunden ist und so das Fangband bildet. Das Vorsehen eines Fangbandes ermöglicht die Einhaltung einer flachen Kissenform des Gassacks, wie sie beispielsweise für einen Seitenbag benötigt wird, ohne eine gleichmäßige Befüllung des Gassackvolumens zu behindern. Durch Verbinden der freien Ränder der Randabschnitte miteinander kann gegenüber dem Stand der Technik Nahtlänge. eingespart werden, was den Herstellungsprozeß erleichtert und verbilligt. Darüber hinaus ist die Anzahl potentieller Schwachstellen verringert. Die Verbindung der freien Ränder der Randabschnitte kann beispielsweise durch Vernähen, Kleben oder auch Klemmen erfolgen. Der mit dem Materiallappen einstückige Materialzuschnitt vereinfacht dessen Handhabung und Positionierung bei der Verbindung mit dem Hauptabschnitt, wodurch das Fangband gebildet wird.

In Weiterbildung der Erfindung ist vorgesehen, daß wenigstens zwei die beiden Lagen miteinander verbindende Fangbänder vorgesehen sind und der Materiallappen die einwärts gefalteten Randabschnitte und den Hauptabschnitt zickzackförmig verbindet und auf diese Weise die Fangbänder bildet. Sind zur Erzielung eines gewünschten Gassackquerschnitts im befüllten Zustand mehrere Fangbänder erforderlich, können diese so ebenfalls mit einem einstückigen Materialzuschnitt verwirklicht werden.

Bevorzugte Ausführungsformen der Erfindung sind in der Zeichnung dargestellt und werden nachfolgend beschrieben. Hierbei zeigt:
Figur 1 eine Vorderansicht einer ersten Ausführungsform des erfindungsgemäßen Gassacks für ein Fahrzeuginsassen-Schutzsystem,
Figur 2 eine Rückansicht des Gassacks der Figur 1,
Figur 3 eine Schnittansicht des Gassacks der Figur 1 entlang der Unie III-III in Figur 1,
Figur 4 eine Draufsicht auf den Materialzuschnitt des Gassacks der Figur 1,
Figur 5 eine Schnittansicht einer zweiten Ausführungsform des erfindungsgemäßen Gassacks und
Figur 6 eine Draufsicht auf den Materialzuschnitt einer dritten Ausführungsform des erfindungsgemäßen Gassacks.

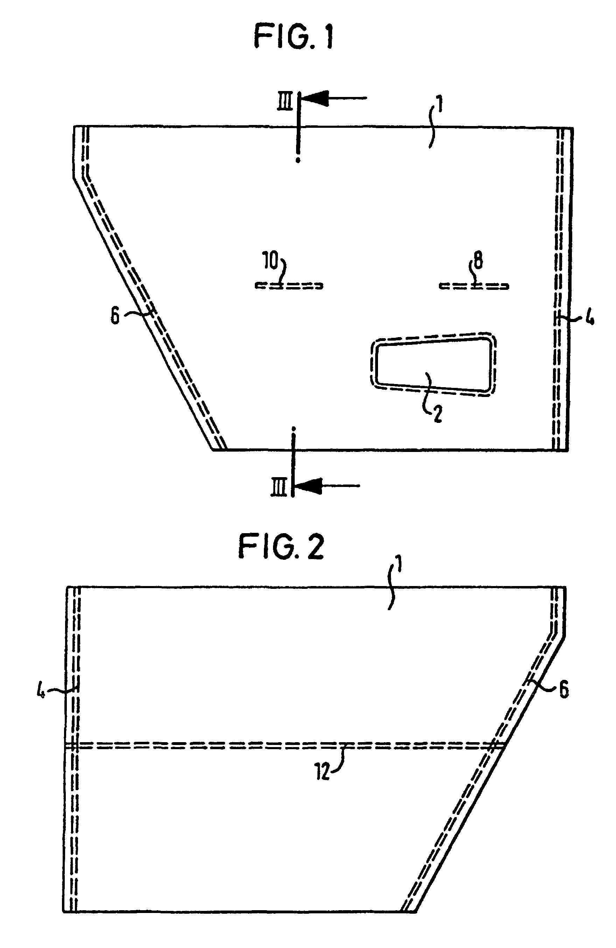

Figur 1 zeigt einen Gassack 1 und eine Einblasöffnung 2, um den Gassack 1 durch einen Gasgenerator zu befüllen. Der Gassack 1 ist als Seitenbag ausgeführt, der den Insassen vor dem Aufprall auf seitliche Karosserie- oder Verkleidungsteile schützen soll, und er ist im zusammengefalteten Zustand beispielsweise hinter einer Seiten- oder Türverkleidung angeordnet. Der Gassack 1 ist seitlich durch Nähte 4 und 6 abgeschlossen, durch die der Gassack gegen die Umgebung abgedichtet ist. Auf ungefähr halber Höhe des Gassacks 1 sind die Fangbandnähte 8 und 10 zu erkennen.

In Figur 2 ist die Seite des Gassacks 1 dargestellt, die nach Aktivierung des Fahrzeuginsassen-Schutzsystems einem Fahrzeuginsassen zugewandt ist. Eine über die gesamte Länge des Gassacks 1 laufende Naht 12 schließt den Gassack nach vorne ab, so daß der Gassack durch die Nähte 4, 6 und 12 vollständig gegen die Umgebung abgedichtet ist.

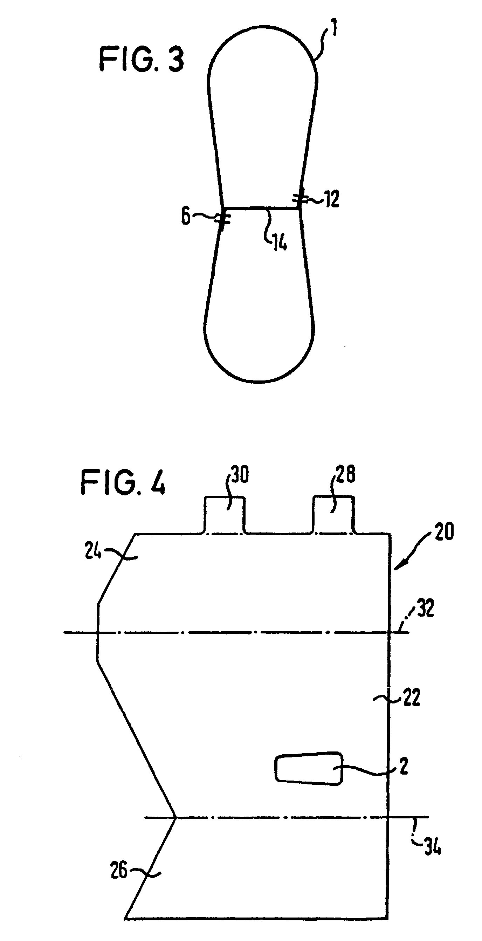

Der Schnittansicht der Figur 3 sowie der Figur 4 ist zu entnehmen, wie der Gassack 1 mit seinen Fangbändern 14 durch Falten und Vernähen eines Materialzuschnitts 20 gebildet ist. Der Materialzuschnitt 20 weist einen Hauptabschnitt 22 und zwei Randabschnitte 24 und 26 auf. An einem freien Rand des Randabschnitts 24 sind zwei Materiallappen 28 und 30 einstückig angeformt. Zur Herstellung des Gassacks 1 wird in einem ersten Schritt der Randabschnitt 24 des Materialzuschnitts 20 um die Linie 32, in der Blattebene der Figur 4 nach hinten, gefaltet. Die Materiallappen 28 und 30 werden daraufhin in einem mittleren Bereich des Materialzuschnitts 20 vernäht, so daß die Fangbandnähte 8 (Figur 1) und 10 entstehen. Die Fangbandnaht 8 befindet sich ungefähr auf gleicher Höhe wie die Fangbandnaht 10, was der Figur 1 zu entnehmen ist. Als zweiter Schritt wird der Randabschnitt 26 des Materialzuschnitts 20 um die Linie 34, in der Blattebene der Figur 4 nach hinten, gefaltet, und der freie Rand des ersten Randabschnitts 24 wird mit dem freien Rand des zweiten Randabschnitts 26 durch die Naht 12 verbunden. Damit ist eine Außenfläche des Gassacks 1 gebildet, und dieser weist durch die Fangbänder 14 die gewünschte Kissenform mit flachem Querschnitt auf. An die Einblasöffnung 2 kann der Gasgenerator angeschlossen werden.

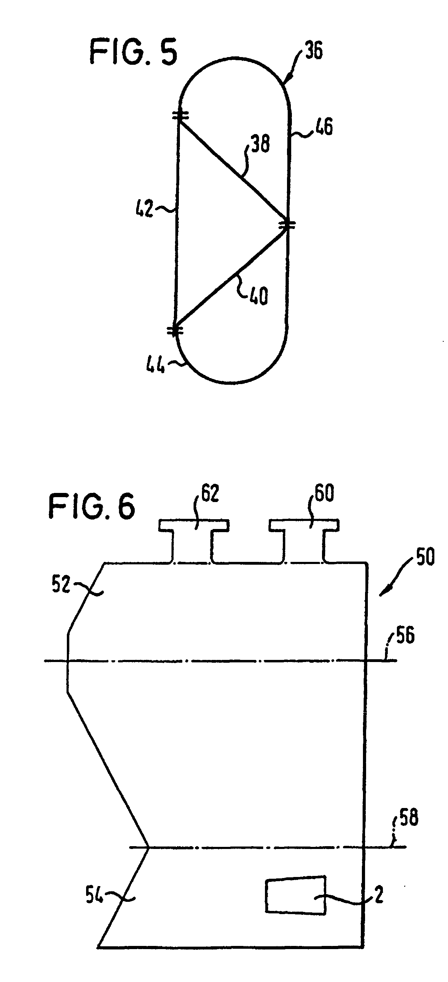

Die Schnittansicht einer zweiten Ausführungsform des erfindungsgemäßen Gassacks 36 ist in der Figur 5 dargestellt. Der Gassack 36 wird hier durch Fangbänder 38 und 40 in eine gewünschte Kissenform gebracht, die die Randabschnitte 42, 44 und den Hauptabschnitt 46 zickzackförmig verbinden. Der Gassack 36 ist in gleicher Weise wie bei der Ausführungsform der Figuren 1 bis 4 durch seitliches Vernähen gegen die Umgebung abgeschlossen, so daß der vollständige, gegen die Umgebung abgeschlossene Gassack 36 mit den Fangbändern 38 und 40 bei minimierter Nahtlänge aus einem einstückigen Materialzuschnitt gebildet ist.

Der Materialzuschnitt 50 der Figur 6 weist einen oberen Randabschnitt 52 und einen unteren Randabschnitt 54 auf, wobei die Einblasöffnung 2 im unteren Randabschnitt 54 angeordnet ist. Abhängig davon, ob die Randabschnitte 52 bzw. 54 in der Blattebene der Figur 6 nach vorne oder hinten um die Linien 56 bzw. 58 gefaltet werden, liegt die Einblasöffnung 2 auf verschiedenen Seiten des Gassacks. Ohne Zuschnittsänderung ist damit auf einfache Weise die Herstellung unterschiedlicher Gassäcke möglich, die beispielsweise als Seitenbag auf der rechten bzw. linken Fahrzeugseite Verwendung finden können. Dem Fahrzeuginsassen zugewandt ist dabei stets die Seite des Gassacks, auf der die Fangbandnähte liegen. Die Materiallappen 60 und 62 des Materialzuschnitts 50, die im vernähten Zustand die Fangbänder bilden, sind T-förmig ausgebildet. Auf diese Weise wird die im Fangband wirkende Kraft auf eine größere Fangbandnahtlänge verteilt, so daß deren Belastung sinkt.

## Patentansprüche

1. Gassack (1; 36) für ein Fahrzeuginsassen-Schutzsystem aus zwei aufeinandergefalteten und miteinander verbundenen Lagen eines einstückigen Materialzuschnitts (20), wobei der Materialzuschnitt (20) einen Hauptabschnitt (22; 46) und zwei einwärts gefaltete Randabschnitte (24, 26; 42, 44) aufweist, **dadurch gekennzeichnet, daß** wenigstens ein die beiden Lagen miteinander verbindendes Fangband (14; 38, 40) vorgesehen ist, beide Randabschnitte (24, 26; 42, 44) auf dieselbe Seite des Hauptabschnitts (20; 46) gefaltet sind und ihre freien Ränder miteinander verbunden sind und daß an einem Teil von wenigstens einem der freien Ränder der Randabschnitte (24, 26; 42, 44) ein Materiallappen (28, 30) ausgebildet ist, der mit dem gegenüberliegenden Hauptabschnitt (20; 46). verbunden ist und so das Fangband (14; 38, 40) bildet.

2. Gassack (36) nach Anspruch 1, **dadurch gekennzeichnet, daß** wenigstens zwei die beiden Lagen verbindende Fangbänder (38, 40) vorgesehen sind und der Materiallappen die einwärts gefalteten Randabschnitte (42, 44) und den Hauptabschnitt (46) zickzackförmig verbindet und so die Fangbänder (38, 40) bildet.

## Claims

1. A gas bag (1; 36) for a vehicle occupant protective system consisting of two layers of a one-piece material cut (20), which are folded on each other and connected with each other, the material cut (20) comprising a main section (22; 46) and two inwardly folded edge sections (24, 26; 42, 44), **characterized in that** at least one tether strap (14; 38, 40) is provided connecting the two layers with each other, that both edge sections (24, 26; 42, 44) are folded onto the same side of the main section (20; 46) and their free edges are connected with each other, and that on a part of at least one of the free edges of the edge sections (24, 26; 42, 44) a material tab (28, 30) is formed which is connected with the opposite main section (20; 46) and thus forms the tether strap (14; 38, 40).

2. The gas bag (36) according to claim 1, **characterized in that** at least two tether straps (38, 40) are provided connecting the two layers and the material tab connects the inwardly folded edge sections (42, 44) and the main section (46) in zig-zag form and thus forms the tether straps (38, 40).

## Revendications

1. Coussin à gaz (1 ; 36) pour un système de retenue de passagers d'un véhicule, constitué de deux couches repliées l'une sur l'autre et reliées l'une à l'autre d'une pièce de matière découpée (20) d'un seul tenant, la pièce de matière découpée (20) présentant une section principale (22 ; 46) et deux sections de bordure (24, 26 ; 42, 44) pliées vers l'intérieur, **caractérisé en ce que** l'on prévoit au moins une bande de garde (14 ; 38, 40) qui relie les deux couches entre elles, **en ce que** les deux sections de bordure (24, 26 ; 42, 44) sont pliées du même côté de la section principale et **en ce que** l'on constitue sur une partie d'au moins un des bords libres des sections de bordure (24, 26 ; 42, 44) une languette de matière (28, 30) qui est reliée à la section principale (20 ; 46) opposée et qui forme ainsi la bande de garde (14; 38, 40).

2. Coussin à gaz (36) selon la revendication 1, **caractérisé en ce que** l'on prévoit au moins deux bandes de garde (38, 40) reliant les deux couches et **en ce que** la languette de matière relie en zigzag les sections de bordure (42, 44) pliées vers l'intérieur et la section principale (46) et forme ainsi les bandes de garde (38, 40).
